Europäisches Patentamt

European Patent Office

Office européen des brevets

(19)

(11) Veröffentlichungsnummer: **0 197 481 B1**

(12) **EUROPÄISCHE PATENTSCHRIFT**

(45) Veröffentlichungstag der Patentschrift: 03.07.91

(51) Int. Cl.⁵: **C09J 127/06**, C08J 5/12

(21) Anmeldenummer: **86104372.7**

(22) Anmeldetag: **29.03.86**

(54) **Mittel zum Verkleben von Formteilen aus Hart-PVC.**

(30) Priorität: **06.04.85 DE 3512537**

(43) Veröffentlichungstag der Anmeldung:
**15.10.86 Patentblatt 86/42**

(45) Bekanntmachung des Hinweises auf die
Patenterteilung:
**03.07.91 Patentblatt 91/27**

(84) Benannte Vertragsstaaten:
**AT BE CH DE FR GB IT LI NL SE**

(56) Entgegenhaltungen:
**DE-A- 2 126 081**
**DE-B- 1 032 869**

(73) Patentinhaber: **Henkel Kommanditgesellschaft
auf Aktien
Postfach 1100 Henkelstrasse 67
W-4000 Düsseldorf-Holthausen(DE)**

(72) Erfinder: **Dierdorf, Hans-Rolf
Ludwig-Wolker-Strasse 25
W-4018 Langenfeld(DE)**
Erfinder: **Wegner, Jürgen, Dr.
Siegfriedstrasse 21
W-4000 Düsseldorf(DE)**

EP 0 197 481 B1

Rank Xerox (UK) Business Services

**Beschreibung**

Die Erfindung betrifft einen verbesserten Klebstoff für Formteile aus Hart-PVC und dabei insbesondere ein Material, das bei signifikant reduzierter Tendenz zur Spannungsrißkorrosion, auch in kritischen Anwendungsfällen, den heute üblichen Anforderungen von Lagerstabilität, Normkonformität, creep-Festigkeit und Fähigkeit zur Spaltfüllung genügt.

Für die Verklebung von Formteilen aus Hart-PVC, beispielsweise entsprechenden PVC-Druckrohren sind Verklebungsmittel üblich, die pulverförmiges PVC, aufgelöst in einem geeigneten PVC-Löser bzw. Lösungsmittelsystem enthalten. Durch Auswahl geeigneter Lösungsmittelgemische werden charakteristische Verarbeitungseigenschaften solcher Klebstoffsysteme wie Verarbeitungszeit und Quellverhalten eingestellt.

Das Klebeprinzip beruht auf dem Quell-, Löse- und Diffusionsvermögen der Lösungsmittel. Die Lösungsmittel diffundieren in das Grundmaterial, quellen es an und führen unter Mitwirkung des gelöst eingebrachten PVC-Anteils bei der Verpressung der Fügeteile zum Verbund. Über einen nicht exakt zu definierenden Zeitraum desorbieren die Lösungsmittel, so daß eine homogene Verbindung erreicht wird.

Systematische Untersuchungen haben gezeigt, daß die in derartigen Klebstoffen enthaltenen Lösungsmittel aufgrund ihrer Löse-, Verdunstungs- und Weichmachungseigenschaften einen unterschiedlichen Einfluß auf mögliche Gefügeschädigungen der Klebeverbindungen ausüben. Dies wird besonders dann kritisch, wenn bei hochbeanspruchten Formteilen, zum Beispiel 4-Wege-Fittingen zu der ohnehin vorhandenen mechanischen Belastung zusätzliche Klebstoffanhäufungen durch Abschieben der auf der Muffeninnenseite aufgetragenen Klebstoffüberschüsse in den Muffenkern anfallen.

Die erfindungsgemäße Lehre zu verbesserten Klebmitteln für Hart-PVC geht unter anderem von der Feststellung aus, daß für solche unerwünschten Gefügeschädigungen, insbesondere bestimmte an sich als gute PVC-Löser bekannte Lösungsmittelkomponenten verantwortlich zu machen sind. Untersuchungen der Anmelderin haben gezeigt, daß PVC-Löser mit cyclischer Struktur, nämlich Cyclohexanon, und - in gewissem Umfang - Tetrahydrofuran Schäden - und hier insbesondere Spannungsrißkorrosionen - auslösen können. Dabei sind an sich Tetrahydrofuran und Cyclohexanon als gute PVC-Löser bekannt - vergleiche beispielsweise "Kunststoffe 70", (1980) 313 bis 318. Ihre Mitverwendung in Klebmassen der hier betroffenen Art ist an sich vorteilhaft oder gar notwendig, wenn man sich die vielgestaltigen Anforderungen bewußt macht, die die Klebstoffmassen bzw. die letztlich ausgebildeten Hart-PVC-Verbindungen zu erfüllen haben.

So müssen diese Klebstoffe hinsichtlich ihres Zeitstandverhaltens eine Vielzahl von Normanforderungen erfüllen - unter anderem DIN 16970, KIWA Nr. 55, BSI 4346, ASTM 2564 und JWWA S 101. Die hier bestehenden Forderungen steuern die Wahl der im Klebstoff eingesetzten PVC-Komponente hinsichtlich Mol-Gewicht und Mol-Gewichtsverteilung. So fordert beispielsweise der sogenannte 60 °C-Test der DIN-16970 eine hinreichende Wärmestabilität des für den Klebstoff verwendeten PVC-Materials. Diese Wärmestabilität steht in Abhängigkeit von den zuvor genannten Stoffparametern.

Nach Untersuchungen der Anmelderin liegt für die hier betroffenen PVC-Klebstoffmassen das anwendungstechnische und wirtschaftliche Optimum des im Klebstoff eingesetzten PVC bei einem K-Wert von 58 ± 1, und erfordert damit - aufgrund des Lösungsverhaltens dieses PVC-Materials - zur Formulierung von lagerstabilen, normkonformen, spaltfüllenden und creep-festen Klebstoffen eine Lösungsmittelzusammensetzung, die relativ hohe Anteile der genannten cyclischen PVC-Löser notwendig macht. Alle Versuche, durch Reduzierung des K-Wertes unter die gegebenen Grenze, die Lösungsmittelzusammensetzung zugunsten nicht-cyclischer Anteile zu verschieben, waren erfolglos, weil mindestens eines der zuvor genannten 4 Kriterien von der Klebmasse nicht bzw. nicht mehr erfüllt wird.

Die Lehre der Erfindung geht von der überraschenden Feststellung aus, daß eine Kombination von PVC-Typen unterschiedlichen K-Werts zu Klebstofformulierungen der hier betroffenen Art führt, die normgerecht, lagerstabil, spaltfüllend und creep-fest sind, gleichzeitig aber durch eine Einschränkung des Gehalts an den genannten cyclischen PVC-Lösern in Lösungsmittelgemisch zu einer signifikanten Reduzierung der Spannungsrißneigung gegenüber den zur Zeit bekannten und in der Praxis eingesetzten Klebstoffmassen führt.

Gegenstand der Erfindung sind dementsprechend Mittel zur Verklebung von Formteilen aus Hart-PVC auf Basis einer PVC-Lösung in einem cyclische PVC-Löser enthaltenden flüssigen Lösergemisch, die PVC-Feststoffgehalte von etwa 10 bis 30 Gew.-% aufweisen. Die neuen Verklebungsmittel sind dadurch gekennzeichnet, daß sie gelöstes PVC des K-Werts von 58 ± 1 in Abmischung mit gelöstem PVC des K-Wertbereichs von 45 bis 52 bei einem Gehalt des Lösungsmittelgemisches an cyclischen PVC-Lösern nicht oberhalb von etwa 50 Gew.-% - bezogen auf das Gewicht des Klebmittels insgesamt - enthalten. In einer bevorzugten Ausführungsform liegen in den neuen Klebmittelmassen die beiden folgenden PVC-Typen in Mischung miteinander gelöst vor:
PVC des K-Werts 58 ± 1 und PVC des K-Werts von etwa 49 bis 50.

Die PVC-Komponente mit dem K-Wert von 58 ± 1 macht in einer weiterhin bevorzugten Ausführungsform etwa 40 bis 85 Gew.-% und insbesondere etwa 45 bis 60 Gew.-% des Gesamtgewichts der gelösten PVC-Typen aus, während die Gegenkomponente mit dem niedrigeren K-Wert dementsprechend 60 bis 15 Gew.-% und in der besonders bevorzugten Ausführungsform 55 bis 40 Gew.-% ausmacht. Es kann zweckmäßig sein, etwa gleiche Gewichtsmengen der beiden PVC-Typen in dem Lösungsmittelgemisch zu lösen.

Es ist ein besonderes Kennzeichen der Erfindung, daß auf die Mitverwendung bekannter guter PVC-Löser cyclischer Struktur nicht verzichtet zu werden braucht, sondern daß es lediglich der Einschränkung ihres Gehalts im Lösungsmittelgemisch bedarf, um die geforderte Reduzierung der Spannungsrißkorrosion zu erfüllen. So enthält die Mischung an PVC-Lösern in einer bevorzugten Ausführungsform der Erfindung die Löser mit cyclischer Struktur und insbesondere Tetrahydrofuran und/oder Cyclohexanon in Mengen von etwa 30 bis 50 Gew.-% und insbesondere in Mengen von etwa 35 bis 45 Gew.-% - jeweils bezogen auf das Gesamtgewicht des Klebmittels.

Die restlichen Anteile der Flüssigphase der erfindungsgemäßen Klebstoffmasse werden durch nicht-cyclische PVC-Löser bestritten, wobei hier nicht-cyclischen Ketonen und hier vor allem dem Methylethylketon besondere Bedeutung zukommen kann. Daneben werden - in der Regel in untergeordneten Mengen - andere nicht-cyclische PVC-Löser eingesetzt, wobei hier der Mitverwendung beschränkter Mengen an Dimethylformamid wiederum besondere Bedeutung zukommen kann.

Besonders bevorzugte Klebmassen im Sinne der Erfindung enthalten etwa 20 Gew.-% an gelösten PVC-Komponenten der genannten Art, etwa 40 bis 50 Gew.-% Tetrahydrofuran und Cyclohexanon - vorzugsweise im Mischungsverhältnis von etwa 1 : 1 bis 2 : 1 - und zum Rest nicht-cyclische PVC-Löser, die insbesondere etwa 25 bis 35 Gew.-% Methylethylketon und zum Rest Dimethylformamid sind. Hierbei beziehen sich die Gewichtsprozentangaben jeweils auf das Gesamtgewicht der Klebstoffmasse.

Zur Herstellung der erfindungsgemäßen Klebstoffe wird zunächst das organische Lösungsmittel in einem beheizbaren, mit einem Kühler versehenen Kessel vorgelegt. Unter Rühren wird anschließend das erfindungsgemäß zu verwendende PVC eingetragen. Das Eintragen des PVC erfolgt zweckmäßig in einer Inertgasphase (Stickstoff). Die Temperatur soll zwischen etwa 20 und 80 °C, vorzugsweise zwischen 30 und 45 °C liegen. Bei dem bevorzugten Temperaturbereich muß etwa 1/2 bis 2 Stunden gerührt werden, bis eine vollständig homogene Lösung erreicht ist.

Gegebenenfalls können in an sich bekannter Weise unter weiterem Rühren geringe Mengen an Füllstoff wie Kieselsäure oder unlösliche Silikate oder auch Titandioxid, Zinkoxid oder dergleichen suspendiert werden. Gewünschtenfalls kann man in dieser Phase oder bereits von vornherein dem Lösungsmittel geringe Mengen eines organischen Farbstoffs zugeben, der das Erkennen bzw. das Charakterisieren des Klebstoffs erleichtern kann. Dafür können Fluoreszenzstoffe oder optische Aufheller verwendet werden. Nachdem alle Bestandteile gelöst bzw. gleichmäßig suspendiert sind, wird der Klebstoff in die Transportgefäße abgefüllt. Ohne jede weitere Lagerung ist er dann verwendungsfähig.

Die erfindungsgemäßen Klebstoffe werden der von der Anmelderin aufgefundenen Tatsache gerecht, daß die unerwünschte Gefährdung durch Spannungsrißbildung in Abhängigkeit vom gewählten Lösungsmittel im Klebstoffsystem in der folgenden Sequenz zunimmt: Methylenchlorid/Dimethylformamid/Methylethylketon/Tetrahydrofuran/Cyclohexanon. Die Ermittlung der Vergleichszahlen zur Beurteilung der Spannungsriß auslösenden Wirkung der Lösungsmittel erfolgte dabei auf 2 Wegen:

1. Bestimmung der Sprödigkeitstemperatur im Schlagzähigkeitstest (DIN 53453) nach Lösungsmitteleinwirkung

Als Prüfkörper dienten Normalkleinstäbe nach DIN 53453, die 5 Minuten in die nachfolgend genannten Lösungsmittel (20 °C) getaucht wurden. Vor Ausführung des Tests wurden die mit Zellstoff abgetupften Stäbe 1 000 Stunden an der Luft von 60 % relativer Feuchte bei 20 °C gelagert. Die Prüfkörper wurden gekühlt und bei den angegebenen Temperaturen dem Schlagzähigkeitstest unterzogen.

3

EP 0 197 481 B1

Kriterium ist eine 50-%ige Bruchquote in Abhängigkeit von der Temperatur.

| | |
|---|---|
| ohne Lösungsmittel | $- 52 \, ^{\circ}C$ |
| Methylenchlorid | $- 38 \, ^{\circ}C$ |
| Dimethylformamid | $- 28 \, ^{\circ}C$ |
| Methylethylketon | $- 21 \, ^{\circ}C$ |
| Tetrahydrofuran | $+ 12 \, ^{\circ}C$ |
| Cyclohexanon | $+ 22 \, ^{\circ}C$ |

2. Scheiteldruckfestigkeit an Rohrabschnitten nach 168 Stunden Lösungsmittelabsorption bei - 5 $^{\circ}$C und anschließender einstündiger Desorptionszeit bei + 20 $^{\circ}$C

Kriterium: Bruch- oder Anrißquote bei 30 % Stauchung,
bezogen auf den Durchmesser.

| | |
|---|---|
| Polyvinylchlorid | O % |
| Methylenchlorid | O % |
| Methylethylketon | 20 % Anriß |
| Tetrahydrofuran | 100 % Anriß |

In den nachfolgend durchnumerierten Rezepturen 1 bis 9 stellt Nr. 1 als Vergleichsbeispiel einen handelsüblichen PVC-Kleber (Tangit: Henkel KGaA, Düsseldorf) der hier betroffenen Gattung dar, der die optimale PVC-Komponente von K-Wert 58 gelöst enthält. Die nachfolgenden Nummern 2 bis 6 sind ebenfalls Vergleichsversuche und beleuchten die Ergebnisse zur Reduzierung der Spannungsrißbildung auf anderem Wege als gemäß der erfindungsgemäßen Lehre. Aus diesen Vergleichen 2 bis 6 wird ersichtlich, daß in keinem Fall alle Anforderungen einschließlich der verringerten Spannungsrißgefahr erfüllt werden können.

Im Sinne der erfindungsgemäßen Lehre sind die Beispiele 7, 8 und 9 Erläuterungen zu deren Ausführung, wobei in allen Fällen das angestrebte Ziel der Vereinigung aller gewünschten Eigenschaften erfüllt wird.

4

## Experimenteller Teil

### Vergleicn Nr. 1 (Stand der Tecnnik)

| | | Anmerkung: |
|---|---|---|
| PVC K-Wert 58 | 20 % | |
| Tetrahydrofuran | 50 % | positiv – normkonform, creep-fest, spaltfüllend |
| Cyclohexanon | 20 % | |
| Dimethylformamid | 5 % | negativ – Spannungsrißgefahr bei hohem Klebstoffüberschuß |
| Methylethylketon | 5 % | |

Vergleichsversuche (Nr. 2 bis 6)

zur Reduzierung der Spannungsrißbildung

### Vergleich Nr. 2

| | | Anmerkung: |
|---|---|---|
| PVC K-Wert 56 | 20 % | |
| Tetrahydrofuran | 40 % | positiv – verminderte Spannungsrißgefahr |
| Cyclohexanon | 10 % | |
| Dimethylformamid | 5 % | negativ – nicht normkonform, zu geringe Wärmefestigkeit |
| Methylethylketon | 25 % | |

### Vergleich Nr. 3

| | | Anmerkung: |
|---|---|---|
| PVC K-Wert 58 | 10 % | |
| PVC K-Wert 50 | 10 % | positiv – normkonform, creep-fest, spaltfüllend |
| Tetrahydrofuran | 50 % | |
| Cyclohexanon | 20 % | negativ – Spannungsrißgefahr bei hohem Klebstoffüberschuß |
| Dimethylformamid | 5 % | |
| Methylethylketon | 5 % | |

### Vergleich Nr. 4a bis c

Es wurden PVC-Sorten mit den K-Werten a) 50 und b) 58 und c) 63 eingesetzt:

| | a) | b) | c) | Anmerkung: |
|---|---|---|---|---|
| PVC-Anteil | 20 | 20 | 20 % | positiv – rel. niedrige Spannungsrißgefahr |
| Methylethyl-keton | 80 | 70 | % | negativ – nicht normkonform, nicht creep-fest, fehlende Lagerstabilität, zu geringe Wärmefestigkeit |
| Dimethylform. | | 10 | % | |
| Methylenchlorid | | | 80 % | |

## Vergleich Nr. 5

| | | |
|---|---|---|
| PVC K-Wert 63 | 10 % | Anmerkung: |
| PVC K-Wert 50 | 10 % | positiv - verminderte |
| Tetrahydrofuran | 40 % | Spannungsrißgefahr, spaltfüllend |
| Cyclohexanon | 15 % | |
| Dimethylformamid | 5 % | negativ - nicht normkonform, fehlende Lager- |
| Methylethylketon | 20 % | stabilität |

## Vergleich Nr. 6

| | | |
|---|---|---|
| PVC K-Wert 63 | 10 % | Anmerkung: |
| PVC K-Wert 46 | 10 % | positiv - verminderte |
| Tetrahydrofuran | 30 % | Spannungsrißgefahr, spaltfüllend |
| Cyclohexanon | 15 % | |
| Methylethylketon | 30 % | negativ - nicht normkonform, fehlende Lager- |
| Dimethylformamid | 5 % | stabilität, zu geringe Wärme- festigkeit |

## Erfindungsgemäße Beispiele
### Beispiel 7

| | | |
|---|---|---|
| PVC K-Wert 58 | 10 % | Anmerkung: |
| PVC K-Wert 50 | 10 % | positiv - normkonform, ver- |
| Tetrahydrofuran | 20 % | minderte Spannungs- rißgefahr, creep- |
| Cyclohexanon | 20 % | fest, spalt- |
| Methylethylketon | 35 % | füllend |
| Dimethylformamid | 5 % | negativ -        ---- |

### Beispiel 8

| | | |
|---|---|---|
| PVC K-Wert 58 | 16 % | Anmerkung: |
| PVC K-Wert 50 | 4 % | positiv - normkonform, ver- |
| Tetrahydrofuran | 20 % | minderte Spannungs- rißgefahr, creep- |
| Cyclohexanon | 20 % | fest, spalt- |
| Methylethylketon | 35 % | füllend |
| Dimethylformamid | 5 % | negativ -        ---- |

**Beispiel 9** (erfindungsgemäßer Klebstoff)

| | | |
|---|---|---|
| PVC K-Wert 58 | 10 % | **Anmerkung:** |
| PVC K-Wert 50 | 10 % | positiv - normkonform, ver- |
| Tetrahydrofuran | 35 % | minderte Spannungs- |
| | | rißgefahr, creep- |
| Cyclohexanon | 15 % | fest, spalt- |
| Methylethylketon | 25 % | füllend |
| Dimethylformamid | 5 % | negativ - ---- |

Als Basis für die technische Bewertung der Produktqualität wird die DIN 16 970 herangezogen. Diese Norm beinhaltet Innendruckzeitstandversuche von mindestens 1 000 Stunden Dauer, sowohl bei Raumtemperatur als auch 60 °C unter Berücksichtigung eines negativen Spaltes von -0,2 mm und eines positiven Spaltes von +0,6 mm. Es wurde bei einem Spalt + 0,6 mm und 20 °C/51 bar sowie 60 °C/16 bar gemessen.

Weiterhin wird eine Mindestdruckscherfestigkeit von 7 N/mm² bei -0,2 mm und 5 N/mm² bei +0,6 mm Spalt gefordert. Die Messung erfolgte bei 20 - 22 °C.

Bei der Beurteilung der Eigenschaften der Klebstoffmischungen, insbesondere der experimentellen Daten ergibt sich, daß die Zusammensetzungen Nr. 4, 5 und 6 nicht lagerstabil sind und daher für den praktischen Gebrauch ausschieden. Mit den Zusammensetzungen 1 und 3 erhielt man Klebungen, die zwar gute Festigkeitswerte (Druckscherfestigkeit, Innendruck-Zeitstand), aber deutliche Neigung zum Spannungsriß aufwiesen. Die Mischung nach Nr. 2 zeigte zusätzlich zu den Nachteilen Nr. 1 und Nr. 3 noch mangelnde Wärmefestigkeit.

Die erfindungsgemäßen Zusammensetzungen nach 7, 8 und 9 lagen in ihren Werten für die Druckscherfestigkeit beim Reihentest (jeweils 6 Proben) zwischen

11,5 und 11,9 N/mm² bei -0,2 und zwischen

8,1 und 8,4 N/mm² bei +0,6.

Die Innendruckstandzeit wurde bei einem positiven Spalt von

0,6 mm bei 20 °C/51 bar und

auch bei 60 °C/16 bar

gemessen und in allen Fällen Standzeiten von mehr als 1 000 Stunden bestimmt.

Spannungsrißkorrosion war somit bei starker Beanspruchung nicht mehr festzustellen.

**Ansprüche**

1. Mittel zur Verklebung von Formteilen aus Hart-PVC auf Basis einer PVC-Lösung in einem cyclische PVC-Löser enthaltenden flüssigen Lösergemisch bei PVC-Feststoffgehalten von etwa 10 bis 30 Gew.-%, dadurch gekennzeichnet, daß es gelöstes PVC des K-Werts von 58 ± 1 in Abmischung mit gelöstem PVC des K-Wertbereiches von 45 bis 52 bei einem Gehalt des Lösergemisches an cyclischen PVC-Lösern nicht über etwa 50 Gew.-% - bezogen auf das Gewicht des Klebmittels - enthält.

2. Klebmittel nach Anspruch 1, dadurch gekennzeichnet, daß die gelöste PVC-Komponente des niedrigeren K-Wertbereichs den K-Wert von etwa 49 bis 50 aufweist.

3. Klebmittel nach Ansprüchen 1 und 2, dadurch gekennzeichnet, daß es die PVC-Typen der unterschiedlichen K-Werte in den folgenden Mischungsbereichen enthält (Gew.-%, bezogen auf Gesamtgewicht der gelösten PVC-Typen):
   K-Wert 58 ± 1: 40 bis 85, vorzugsweise 45 bis 60,
   K-Wert 45 - 52: 60 bis 15, vorzugsweise 55 bis 40.

4. Klebmittel nach Ansprüchen 1 bis 3, dadurch gekennzeichnet, daß das Lösergemisch die PVC-Löser cyclischer Struktur und insbesondere Tetrahydrofuran und/oder Cyclohexanon in Mengen von etwa 30 bis 50 Gew.-%, vorzugsweise in Mengen von 35 bis 45 Gew.-% - jeweils bezogen auf Gesamtgewicht des Klebmittels - enthält.

**5.** Klebmittel nach Ansprüchen 1 bis 4, dadurch gekennzeichnet, daß das flüssige Lösergemisch neben der eingeschränkten Menge an cyclischen Lösern nicht-cyclische Ketone, insbesondere Methylethylketon, vorzugsweise in Abmischung mit untergeordneten Mengen an Dimethylformamid enthält.

**Claims**

**1.** A composition for bonding mouldings of rigid PVC based on a PVC-solution in a liquid solvent mixture containing cyclic PVC-solvents for PVC-solids contents of from about 10 to 30% by weight, characterized in that it contains dissolved PVC having a K-value of 58 ± 1 in admixture with dissolved PVC having a K-value of from 45 to 52 for a content of cyclic PVC-solvents in the solvent mixture of no more than about 50% by weight, based on the weight of the adhesive.

**2.** An adhesive as claimed in claim 1, characterized in that the dissolved PVC-component having the lower K-value has a K-value in the range from about 49 to 50.

**3.** An adhesive as claimed in claims 1 and 2, characterized in that it contains the PVC types with the different K-values mixed in the following proportions (% by weight, based on the total weight of the dissolved PVC-types):
K-value 58 ± 1: 40 to 85, preferably 45 to 60
K-value 45 - 52: 60 to 15, preferably 55 to 40.

**4.** An adhesive as claimed in claims 1 to 3, characterized in that the solvent mixture contains the cyclic PVC-solvents, more especially tetrahydrofuran and/or cyclohexanone, in quantities of from about 30 to 50% by weight and preferably in quantities of from 35 to 45% by weight, based in each case on the total weight of the adhesive.

**5.** An adhesive as claimed in claims 1 to 4, characterized in that, in addition to the limited amount of cyclic solvents, the liquid solvent mixture contains non-cyclic ketones, more especially methyl ethyl ketone, preferably in admixture with small quantities of dimethyl formamide.

**Revendications**

**1.** Moyen pour coller des pièces de forme en PVC dur à base d'une solution de PVC dans un mélange de solvants liquides contenant un solvant cyclique du PVC avec des teneurs en PVC solide comprises entre environ 10 et 30% en poids, caractérisé en ce qu'il contient du PVC dissous ayant une valeur K de 58 ± 1 en mélange avec du PVC dissous dont la valeur K est comprise dans la gamme de 45 à 52, avec une teneur du mélange de solvants en solvants cycliques du PVC ne dépassant pas 50% en poids rapportés au poids de l'adhésif.

**2.** Adhésif selon la revendication 1, caractérisé en ce que le constituant PVC dissous ayant la gamme de valeur K inférieure présente une valeur K comprise entre environ 49 et 50.

**3.** Adhésif selon les revendications 1 et 2, caractérisé en ce qu'il contient des types de PVC ayant des valeurs K différentes, avec les proportions de mélange suivantes (% en poids) rapportées au poids total des types de PVC dissous :
valeur K 58 ± 1 : 40 à 85, de préférence 45 à 60,
valeur K 45 - 52 : 60 à 15, de préférence 55 à 40.

**4.** Adhésif selon les revendications 1 à 3, caractérisé en ce que le mélange de solvants contient un solvant du PVC de structure cyclique et, en particulier, du tétrahydrofuranne et/ou de la cyclohexanone en quantités d'environ 30 à 50% en poids et, de préférence, en quantités de 35 à 45% en poids, rapportées chaque fois au poids total de l'adhésif.

**5.** Adhésif selon les revendications 1 à 4, caractérisé en ce que le mélange de solvants liquides contient, outre une quantité limitée de solvants cycliques, des cétones non cycliques et, en particulier, de la méthyléthylcétone, de préférence en mélange avec de faibles quantités de diméthylformamide.